Europäisches Patentamt

European Patent Office

Office européen des brevets

(11) Veröffentlichungsnummer: **0 385 198**
**A1**

## (12) EUROPÄISCHE PATENTANMELDUNG

(21) Anmeldenummer: **90103015.5**

(22) Anmeldetag: **16.02.90**

(51) Int. Cl.⁵: **C02F 3/20**

(30) Priorität: **03.03.89 DE 3906711**

(43) Veröffentlichungstag der Anmeldung:
**05.09.90 Patentblatt 90/36**

(84) Benannte Vertragsstaaten:
**AT BE CH DE DK ES FR GB IT LI LU NL**

(71) Anmelder: **PASSAVANT-WERKE AG**

**D-6209 Aarbergen 7(DE)**

(72) Erfinder: **Muskat, Josef, Dr.rer.nat.**
**Auf dem Langwehr**
**D-6209 Aarbergen 2(DE)**

(54) **Vorrichtung zum Belüften von Wasser und Abwasser.**

(57)     1. Die Erfindung betrifft sogenannte Tellerbelüfter zum Begasen von Wasser und Abwasser.

2.1. Die aufweitbare Membran dieser Tellerbelüfter weist Schlitze auf, die in Umfangsrichtung verlaufen. Durch unterschiedliche Dehnung kommt es zu einer ungleichmäßigen Blasenverteilung über die Tellerfläche. Werden die Schlitze erfindungsgemäß in radialer Richtung angeordnet, dann sorgt die erhöhte Längsspannung an den Schlitzflanken für eine gleichmäßigere Blasengröße.

Fig.1

EP 0 385 198 A1

## Vorrichtung zum Belüften von Wasser uns Abwasser

Die Erfindung bezieht sich auf eine Vorrichtung zum Belüften von Wasser und Abwasser, wie sie z.B. in der DE-OS 37 10 910 beschrieben ist. Sie besteht aus einer starren und im wesentlichen ebenen Halteplatte und einer darüber aufgespannten, zum Austritt von Belüftungsgas mit feinen Schlitzen versehenen aufweitbaren Membran aus Gummi oder einem gummiähnlichen Kunststoff. Die Halteplatte weist hierzu mindestens einen Anschluß zum Zuführen des Belüftungsgases auf. Derartige, unter dem Begriff "Tellerbelüfter" bekannte Belüftungsvorrichtungen haben den Vorteil, daß sich die Schlitze beim Beenden der Gaszufuhr schließen und keine Abwasserinhaltsstoffe in den Tellerbelüfter und das Gassystem gelangen können.

Es ist üblich, die Schlitze auf Kreisen um das Zentrum anzuordnen und in Umfangsrichtung verlaufen zu lassen. Beim Aufwölben der Membran werden die Schlitze durch die in Radialrichtung auftretende Dehnung stark aufgeweitet. Da die Dehnung im Zenit der Membran am stärksten ist, werden auch dort die Gasblasen am größten sein. Dies ist unerwünscht. Angestrebt wird vielmehr eine gleiche Blasenverteilung und -größe über die ganze Tellerfläche. Um diesen Nachteil zu vermeiden, wurde in der DE-OS 37 10 910 bereits vorgeschlagen, die Wandstärke der Membran im Zentrum zu vergrößern, um so dort eine geringere Dehnung zu erreichen. Die Herstellung einer solchen Membran ist jedoch teuer, und der Erfolg ist ungewiß. Die Wandstärke müßte nämlich stufenlos nach außen verringert werden, wenn die Blasengröße überall gleich sein soll.

Die Aufgabe, einen Tellerbelüfter mit absolut gleicher Blasengröße zur Verfügung zu stellen. wird gemäß der Erfindung nunmehr dadurch gelöst, daß die Schlitze in radialer Richtung angeordnet sind. Die Schlitze werden bei dieser Ausrichtung durch die Dehnung nicht mehr aufgeweitet, sondern im Gegenteil durch die erhöhte Längsspannung zusammengehalten. Im Zentrum, wo die Längsspannung der Schlitzflanken am größten ist, können die Schlitze länger gemacht werden als außen. Als Ausgleich für den größeren Umfang können die Schlitze außen dichter angeordnet sein als innen. Außerdem ist ein seitlicher Versatz auf der Radialen sinnvoll, um so die Längsspannungen entlang der Schlitzflanken überall gleich groß zu machen.

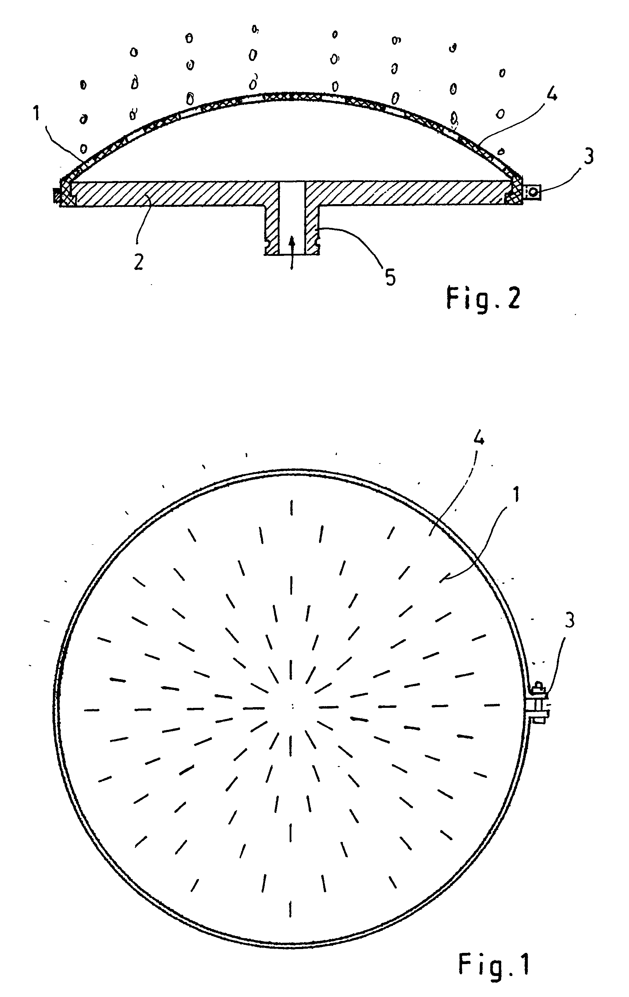

In Fig. 1 ist das Schlitzbild eines kreisrunden Tellerbelüfters in der Draufsicht dargestellt. Es ist deutlich zu sehen, daß die Schlitze 1 längs Radialstrahlen verlaufen und nach außen hin immer kürzer werden. Dafür sind sie außen auf zusätzlichen Strahlen dichter angeordnet, um einen flächenkonstanten Gasdurchsatz zu erreichen.

Fig. 2 zeigt im Schnitt durch einen erfindungsgemäßen Tellerbelüfter die Halteplatte 2 mit der am Rand mittels einer Spannschelle 3 eingeklemmten Schlitzmembran 4. In der Mitte weist die Halteplatte 2 den Anschluß 5 für die Zufuhr des Belüftungsgases auf.

## Ansprüche

1. Vorrichtung zum Belüften von Wasser und Abwasser, mit einer starren und im wesentlichen ebenen Halteplatte und einer darüber aufgespannten, zum Austritt von Belüftungsgas mit feinen Schlitzen versehenen, aufweitbaren Membran aus Gummi oder gümmiähnlichem Kunststoff, wobei die Halteplatte mindestens einen Anschluß zum Zuführen des Belüftungsgases aufweist, **dadurch gekennzeichnet**, daß die Schlitze (1) in radialer Richtung verlaufen.

2. Vorrichtung nach Anspruch 1, **dadurch gekennzeichnet**, daß das Zentrum der Membran (4) frei von Schlitzen (1) ist.

3. Vorrichtung nach Anspruch 1 oder 2, **dadurch gekennzeichnet**, daß die Schlitze (1) in der Nähe des Zentrums länger sind als außen.

4. Vorriohtung nach Anspruch 1, 2 oder 3, **dadurch gekennzeichnet**, daß die Schlitze (1) außen dichter angeordnet sind als innen.

5. Vorrichtung nach einem oder mehreren der vorstehenden Ansprüche, **dadurch gekennzeichnet**, daß die Halteplatte (2) kreisrund ist.

Fig. 2

Fig.1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION E ANMELDUNG (Int. ʿ |
|---|---|---|---|
| A | GB-A- 824 376 (THE DISTILLERS CO.) <br> * Seite 3, Ansprüche 1-7; Figuren 1-3 * <br> --- | 1-5 | C 02 F 3/ |
| A | FR-A-1 044 737 (THE DISTILLERS CO.) <br> * Seite 4; Zusammenfassung Punkte 1,6,8,10 * <br> --- | 1-5 | |
| A | DE-A-2 757 255 (MENZEL) <br> * Seite 1, Ansprüche 1,6; Seite 4, letzter Absatz; Seite 3, zweiter Absatz, Zeilen 1-5 * <br> --- | 1 | |
| A | DE-A-3 318 412 (MENZEL) <br> * Seite 4, Zeile 12 - Seite 5, Zeile 23; Seite 1, Ansprüche 1-7 * <br> ----- | 1 | |

RECHERCHIERTE
SACHGEBIETE (Int

C 02 F
B 01 F

Der vorliegende Recherchenbericht wurde für alle Patentansprüche erstellt

| Recherchenort | Abschlußdatum der Recherche | Prüfer |
|---|---|---|
| DEN HAAG | 12-04-1990 | TEPLY J. |